# EUROPEAN PATENT SPECIFICATION

(11) **EP 3 254 568 B1**
(45) Date of publication and mention of the grant of the patent: **08.05.2019**
(21) Application number: 16173042.9
(22) Date of filing: 06.06.2016
(51) Int. Cl.: A23F 5/18, A23F 5/28, A23L 5/20

(54) **METHOD TO REDUCE ACRYLAMIDE CONTENT ON A COFFEE LIQUID EXTRACT AND METHOD TO PRODUCE INSTANT COFFEE**
VERFAHREN ZUR REDUZIERUNG DES ACRYLAMIDGEHALTS EINES KAFFEEFLÜSSIGEXTRAKTS UND VERFAHREN ZUR HERSTELLUNG VON INSTANTKAFFEE
PROCÉDÉ POUR RÉDUIRE LA TENEUR EN ACRYLAMIDE SUR UN EXTRAIT DE CAFÉ LIQUIDE ET PROCÉDÉ POUR PRODUIRE DU CAFÉ INSTANTANÉ

(43) Date of publication of application: 13.12.2017
(73) Proprietor: Cia. Iguacu de Cafe Soluvel, Cornelio Procopio (BR)
(72) Inventor: Viegas, Marcelo Caldeira, Cornélio Procópio (BR); Fontanini, José Ítalo Candêo, Cornélio Procópio (BR); Amorim, Cleber Venâncio, Cornélio Procópio (BR)
(74) Representative: Patentanwälte Geyer, Fehners & Partner mbB

(56) References cited:
- EP-A1- 1 419 703
- EP-A1- 1 872 665
- EP-A1- 2 160 948
- WO-A1-2004/082391
- WO-A1-2013/108744
- US-A- 3 620 756
- US-A1- 2004 101 607
- US-A1- 2005 079 254

## Description

### Field of the invention

This invention refers to a method to reduce the acrylamide content of a liquid extract from roasted beans, i.e. coffee, cocoa, cereal and any other grains. This invention also refers to a method for producing soluble coffee using the reduction method of acrylamide content.

### Prior Art

As known on the prior art, a wide variety of foods have acrylamide content which is found, particularly, in food products of carbohydrates which were have been submitted to heating or processed at high temperatures, such as coffee, cocoa, cereal, crackers , potato chips, bread, etc.

The reduction of acrylamide in such food products could be accomplished by reducing or eliminating the precursor compounds that form acrylamide, for example, asparagine, inhibiting in this way the formation of acrylamide during food processing, or by removing acrylamide content already formed on the product, prior to its release for the final product consumption.

An example of method for reducing acrylamide content in thermally processed food products is disclosed in the patent US7811618B2. On this document, it is described a method that provides the reduction of asparagine as the precursor of acrylamide in the food, in a previous stage of the process before acrylamide formation. In this process, it is used a potato extract deficient in asparagine to provide the leaching of asparagine out of potato product. This method is more closely related to potato products which, after processing, have a reduced acrylamide content. Besides being more specifically directed to such type of food product, the above method presents a certain complexity in its implementation, and should not be used in applications where maintaining the aroma and flavor of infusions and extracts is crucial for obtaining a desired quality level at the final product. Another document related to this subject is PI0315505-6 which also states, as on the previous document, the reduction of asparagine as a precursor to acrylamide. In this process, the coffee beans, before roasting, are treated by adding an asparagine-reducing enzyme. Although specifically directed to the coffee product, the above method requires the usage of an enzyme for treating the coffee beans which have not been yet roasted and it has the disadvantage of affecting the aroma and taste of the infusion to be obtained from these treated beans.

Another document from the previous technique is represented by the patent US7220440B2 which suggests the usage of an enzyme to be in contact with unroasted coffee beans in order to reduce part of their asparagine content. Thus, when roasting the coffee beans, asparagine precursor content will be reduced, leading to a consequent reduction in acrylamide content on the roasting step of coffee beans. Despite being specifically addressed to coffee product, the above method requires the usage of an enzyme for treating the coffee beans which have not been yet roasted and it has the disadvantage of affecting the aroma and taste of the infusion to be obtained from these treated beans, as already mentioned on the previous document.

The methods of the prior art, mentioned above, have as common characteristic the treatment of food product prior to its thermal processing to obtain a higher or lower reduction of asparagine levels in the product to be subsequently submitted to temperatures sufficient to convert the asparagine precursor to the undesirable acrylamide compound. The reduction of asparagine interferes directly on coffee quality, as the aminoacids are important precursors of taste and aroma of the coffee.

The European Patent document EP0078650A1 describes a process for improving the hydrolysis of a coffee extract, comprising in the operation of passing through the coffee extract to a polyacrylamide resin bed, aiming to remove "off-flavor" on coffee extract. This process is related to the coffee extract itself, in other words, the product coffee, after roasting step, and using a polyacrylamide resin.

However, this process considers the usage of a resin to remove the "off-flavor" from coffee extract, and there is no indication or suggestion that states this resin also has the function of reducing acrylamide levels in the obtained coffee extract after roasting and grinding the green coffee beans. On the contrary, the usage of polyacrylamide resin indicates the inexistence of any concern or interest in reducing the acrylamide content of the coffee product.

US 2005/079254 A1 discloses a method for the reduction of acrylamide in food products and food products having reduced levels of acrylamide. The method comprises adding to a food material a multivalent cation, in one embodiment a water-soluble, non-chelated multivalent cation.

US 2004/101607 A1 discloses a method for reducing acrylamide in food products by reducing the level of asparagine in a food material, comprising: providing a food material comprising asparagine; optionally reducing the particle size of the food material; optionally increasing the cellular membrane permeability of the food material; and extracting the asparagine from the food material.

### Summary of the Invention

Due to the inconveniences of the methods known so far, to reduce the acrylamide content on foods, such as coffee, submitted to high temperatures in its process, it is of interest to develop an easier method to be implemented, with low or no additional costs incurrence on its production process and which enables the reduction of acrylamide level in the final food product submitted to roasting, without affecting negatively their taste and flavor.

A more specific objective of this invention, but not exclusive, is to provide a method to produce soluble coffee with reduced levels of acrylamide.

The first of the above objectives is achieved by the method according to claim 1.

A coffee extract can be submitted, obtained from roasted coffee beans in contact with a cationic adsorbent resin for a time sufficient to ensure a substantial reduction in acrylamide content of the liquid extract which will be released from the cationic adsorbent resin charge, of at least a bed through which is passed a flow of the liquid extract.

The second of the above objectives is achieved by the method of claim 7. A method for producing soluble coffee comprises the following steps: roasting of green coffee beans; granulating the roasted beans; extraction of the soluble solids to produce a liquid coffee extract; and concentration of the liquid coffee extract for subsequent drying or packaging in concentrated format. The method of soluble coffee production presents the particularity of submitting the liquid coffee extract before its concentration to a step of substantial reduction of its acrylamide content through adsorption by a cationic adsorbent resin.

### Brief Description of Drawings

The invention will be described below, by referring to the attached drawings, as examples and in which:

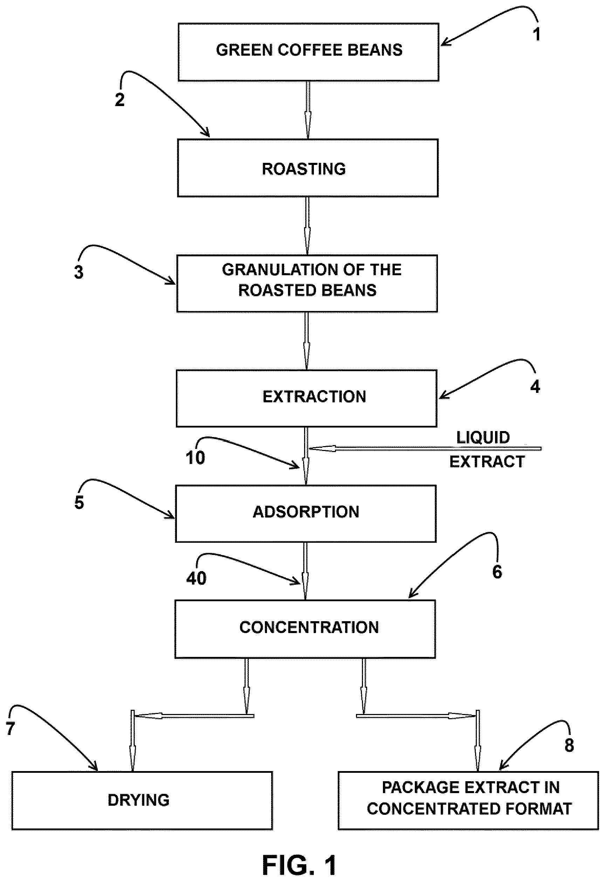

Figure 1 represents a simplified process diagram illustrating the process steps of a soluble coffee production including a step of reducing the acrylamide content by adsorption; and
Figure 2 is a schematic and enlarged detail of the adsorption step, illustrating an exemplary column containing three adsorbent beds of cation resins, arranged descendant in series.

### Description of the invention

As previously described and illustrated, the method to reduce the acrylamide content can be applied to the liquid extract 10 obtained from coffee beans submitted to a roasting operation such as with the green coffee beans 1, Cocoa, cereal, and other similar grains necessarily submitted to a treatment step conducted at relatively high temperatures of 120°C or more, sufficient for the formation of acrylamide in such food products, being known that this substance is undesirable to human and animal consumption. According to a first aspect of the invention, the method for reducing the acrylamide content in question comprises in submitting the liquid extract 10, obtained from the roasted beans, upon contact with a charge 20 of a cationic adsorbent resin.

The contact of the liquid extract 10 with the charge 20 of the cationic adsorbent resin should be maintained for a time sufficient to ensure a reduction of at least 50% of acrylamide content of the liquid extract treated 40 to be released from the charge 20 of the cationic adsorbent resin.

In a preferred form of acrylamide adsorption step, the charge 20 of cationic adsorbent resin takes the form of at least one adsorbent bed 21 through which is passed an F flow of the liquid extract 10, being the flow rate of the liquid extract 10 and the operating time of the bed of adsorbent 21 to be replaced by an adsorbent bed 21, new or regenerated, being mentioned as adsorbent bed 21 dimensioned to ensure a desired reduction in acrylamide content of the treated liquid extract 40.

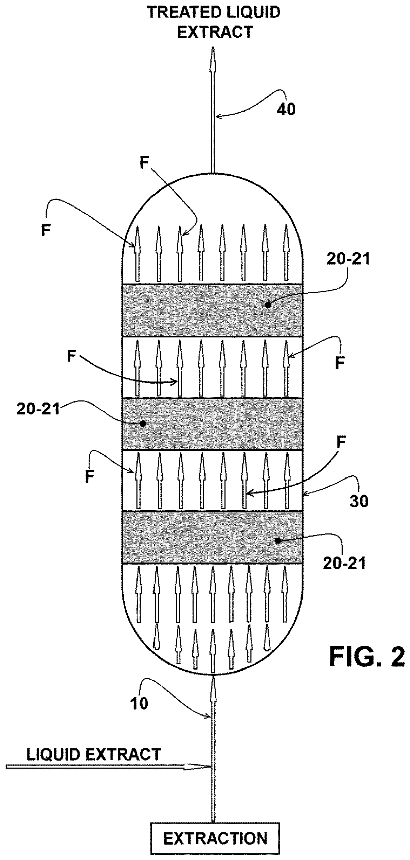

In the example of Figure 2, the flow F of the liquid extract 10 is passed, preferably ascendant, through a plurality of adsorbent beds 21, each representing a charge 20 of cationic adsorbent resin, being charge 20 contained within an adsorption column 30 in any suitable construction.

It should be understood that the methods of adsorption by continuous passage of flow F of the liquid extract 10 through a bed 21 of a charge 20 of a cationic adsorbent resin, for the charges 20 already saturated in a determined adsorption column 30 can be regenerated for the new adsorption step without interrupting the process of reducing the acrylamide content of the liquid extract 10. Besides, it is also possible the usage of multiple adsorption column 30 arranged in parallel, to be used one or more of them selectively used while the others are with their charge 20 of cationic adsorbent resin are being submitted to a regeneration operation which can be performed by different methodologies, known or not.

In general, the contact between the soluble solid of the liquid extract 10 and the charge 20 of the cationic adsorbent resin can be done in a ratio of 10kg to 20 kg of soluble solid for each kg of the charge 20 of the cationic adsorbent resin.

The cationic adsorbent resin appropriated to the objectives of the present invention is a porous resin of superficial area of 700 m2/g to 1200 m2/g, preferably 900 m2/g with pore volume usually between 700-1000 Angstroms, preferably 900 Angstroms in diameter (or 0.00009 mm) . This cationic resin is strongly acid, for example, the Hypersol-Macronet family (PUROLITE), as commercially available MN500 resin produced by PUROLITE which is suitable for adsorption / separation of organic hydrophobic species.

It should be observed that the acrylamide molecule has molecular weight of 71.08 g/mol, this molecular weight value is much less than the value the one of the hydrolyzed soluble solids in the coffee extract, which promotes migration of acrylamide molecules to the pores of the cationic adsorbent resin.

According to a more specific objective of the present invention, a method is proposed for producing instant coffee following the usual steps of its production: roasting 2 of green coffee beans 1; 3 granulating the roasted beans; 4 extraction of soluble solids of coffee by infusion, to provide a liquid coffee extract 10; concentration 6 of the liquid extract 10 for later drying 7 or 8 package extract in concentrated format.

In this soluble coffee production process, the coffee liquid extract 10 is submitted, before its concentration step 6, to an adsorption stage 5, for reducing at least 50% on its content of acrylamide by submitting the liquid extract 10 in contact with a charge 20 cation of the cationic adsorbent resin according to the procedures described above, aiming to provide the reduction of acrylamide content on treated liquid extract 40 to be released from charge 20 of the cationic adsorbent resin. Specifically on soluble coffee production, the liquid extract 10 of roasted coffee beans has a concentration of 05% to 20% of soluble solids, pH 4.5 to 5.5 and a temperature of 05°C to 50°C when in contact with the charge 20 of the cationic resin. The above-mentioned parameters guarantee a reduction of at least 50% in the acrylamide content of the treated liquid extract 40.

The method for reducing acrylamide content as described above allows the final product, in form of soluble/instant coffee or concentrated coffee extract or other food products, made from grains submitted to roasting, not to present unaltered organoleptic characteristics due to the fact that the extraction of acrylamide is made by adsorption without adding characteristic of its chemical composition.

## Claims

1. A method for reducing the acrylamide content of a liquid extract from roasted beans i.e. coffee, cocoa, cereal and any other grains, comprising on its production process the step of submitting the liquid extract in contact to a charge of cationic adsorbent resin for a time sufficient to ensure, by replacing the charge by a new or regenerated one, a reduction of at least 50% of the acrylamide content of the treated liquid extract to be released from the charge of the cationic adsorbent resin, **characterized in that** the cationic adsorbent resin is a porous resin with a superficial area of 700 to 1200 m²/g and with a pore diameter between 700-1000 Angstrom, and **in that** the charge of the cationic adsorbent resin is strongly acidic.

2. Method, according to claim 1, **characterized by** the fact that the charge of the cationic adsorbent resin takes the form of at least one adsorbent bed through which is passed a F flow of the liquid extract, being the flow rate of the liquid extract and the operating time of the bed of adsorbent to be replaced by an adsorbent bed, new or regenerated, being mentioned as adsorbent bed dimensioned to ensure a desired reduction in acrylamide content of the treated liquid extract.

3. Method, according to claim 2, **characterized by** the fact that the flow (F) of the liquid extract is passed ascendingly through at least one adsorbent bed of a charge of a cationic adsorbent resin, contained in a adsorption column.

4. Method, according to claim 1, **characterized by** the fact that the charge of the cationic adsorbent resin is defined by particles with a superficial area of 900 m2/g.

5. Method, according to claim 1, characterized that the load (20) the cationic resin adsorbent particles is defined by pore diameter of 900 Angstrom.

6. Method, according to any one of the claims 1 to 5, **characterized by** the fact that the contact between the soluble solid of the liquid extract and the charge of the cationic adsorbent resin can be done in a ratio of 10kg to 20 kg of soluble solid/ kg of the charge (20) of the cationic adsorbent resin.

7. A method to produce soluble/instant coffee comprising the steps: roasting of green coffee beans; granulation of the roasted beans; extraction of the soluble solids of the coffee by infusion to provide a liquid coffee extract; concentration of the treated liquid extract for later drying or packing of the extract in concentrated format, being the method **characterized by** the fact that submitting the coffee liquid extract, before its concentration step, to a reduction step of at least 50% on its acrylamide content in accordance with the method defined in any one of the claims 1 to 6 and **characterized by** the fact that the liquid extract of roasted coffee beans provide a concentration of 05% to 20% soluble solids, pH 4.5 to 5.5 and a temperature of 05°C to 50°C when in contact to the charge of the cationic adsorbent resin.

## Patentansprüche

1. Verfahren zum Verringern des Acrylamidgehalts eines flüssigen Extrakts von gerösteten Bohnen, d. h. Kaffee, Kakao, Getreide und beliebigen anderen Körnern, umfassend bei dessen Herstellungsverfahren den Schritt des Unterwerfens des flüssigen Extrakts an Kontakt mit einer Charge von kationischem Adsorberharz für eine ausreichende Zeit, um zu gewährleisten, mit Ersetzen der Charge durch eine neue oder regenerierte, eine Verringerung von wenigstens 50% des Acrylamidgehalts des behandelten flüssigen Extrakts, der von der Charge des kationischen Adsorberharzes freigegeben wird, zu erzielen, **dadurch gekennzeichnet, dass** das kationische Adsorberharz ein poröses Harz mit einer Oberfläche von 700 bis 1200 m²/g und mit einem Porendurchmesser zwischen 700 und 1000 Angström ist und dass die Charge das kationischen Adsorberharzes stark sauer ist.

2. Verfahren gemäß Anspruch 1, **dadurch gekennzeichnet, dass** die Charge des kationischen Adsorberharzes die Form wenigstens eines Adsorberbetts annimmt, durch das ein Fluss F des flüssigen Extrakts geleitet wird, wobei die Flussrate des flüssigen Extrakts und die Arbeitsdauer des Betts von Adsorptionsmittel, das durch ein neues oder regeneriertes Adsorberbett ersetzt werden muss, ist, wobei als Adsorberbett bezeichnet wird, das bemessen ist, um eine gewünschte Verringerung des Acrylamidgehalts des behandelten flüssigen Extrakts zu gewährleisten.

3. Verfahren gemäß Anspruch 2, **dadurch gekennzeichnet, dass** der Fluss (F) des flüssigen Extrakts aufsteigend durch wenigstens ein Adsorberbett einer Charge eines kationischen Adsorberharzes, die in einer Adsorptionssäule enthalten ist, geleitet wird.

4. Verfahren gemäß Anspruch 1, **dadurch gekennzeichnet, dass** die Charge des kationischen Adsorberharzes durch Partikel mit einer Oberfläche von 900 m²/g definiert ist.

5. Verfahren gemäß Anspruch 1, **dadurch gekennzeichnet, dass** die Belastung (20) der Partikel des kationischen Adsorberharzes durch einen Porendurchmesser von 900 Angström definiert ist.

6. Verfahren gemäß einem der Ansprüche 1 bis 5, **dadurch gekennzeichnet, dass** der Kontakt zwischen dem löslichen Feststoff des flüssigen Extrakts und der Charge des kationischen Adsorberharzes in einem Verhältnis von 10 kg bis 20 kg an löslichem Feststoff/kg der Charge (20) des kationischen Adsorberharzes durchgeführt werden kann.

7. Verfahren zur Herstellung von löslichem Kaffee/Instantkaffee, umfassend die Schritte: Rösten von grünen Kaffeebohnen; Granulieren der gerösteten Bohnen; Extrahieren der löslichen Feststoffe des Kaffees durch Infusion, um einen flüssigen Kaffeeextrakt zu erhalten; Konzentrieren des behandelten flüssigen Extrakts zum späteren Trocknen oder Verpacken des Extrakts in konzentrierter Form, wobei das Verfahren **dadurch gekennzeichnet ist, dass** der flüssige Kaffeeextrakt vor dem Schritt des Konzentrierens an einen Schritt des Verringerns seines Acrylamidgehalts um wenigstens 50 % gemäß dem Verfahren gemäß einem der Ansprüche 1 bis 6 unterzogen wird, und **dadurch gekennzeichnet, dass** der flüssige Extrakt von gerösteten Kaffeebohnen bei dem Kontakt mit der Charge des kationischen Adsorberharzes eine Konzentration von 05 % bis 20 % an löslichen Feststoffen, einen pH-Wert von 4,5 bis 5,5 und eine Temperatur von 05 °C bis 50 °C aufweist.

## Revendications

1. Méthode de réduction de la teneur en acrylamide d'un extrait liquide issu de fèves ou grains torréfiés, c'est-à-dire de café, de cacao, de céréales ou de tout autre grain, comprenant dans son procédé de production, l'étape consistant à mettre l'extrait liquide en contact avec une charge de résine adsorbante cationique pendant une durée suffisante afin de garantir, par le remplacement de la charge par une charge nouvelle ou régénérée, une réduction d'au moins 50% de la teneur en acrylamide de l'extrait liquide traité devant être libéré à partir de la charge de la résine adsorbante cationique, **caractérisée en ce que** la résine adsorbante cationique est une résine poreuse ayant une surface superficielle allant de 700 à 1200 m²/g et un diamètre de pores de 700-1000 Angströms, et **en ce que** la charge de la résine adsorbante cationique est fortement acide.

2. Méthode selon la revendication 1, **caractérisée en ce que** la charge de la résine adsorbante cationique prend la forme d'au moins un lit adsorbant dans lequel on fait passer un écoulement F de l'extrait liquide, étant le débit de l'extrait liquide et le temps de fonctionnement du lit d'adsorbant à remplacer par un lit adsorbant, nouveau ou régénéré, étant cité comme lit adsorbant dimensionné afin de garantir une réduction désirée de la teneur en acrylamide de l'extrait liquide traité.

3. Méthode selon la revendication 2, **caractérisée en ce qu'**on fait passer l'écoulement (F) de l'extrait liquide de manière ascendante dans au moins un lit adsorbant d'une charge d'une résine adsorbante cationique, contenu dans une colonne d'adsorption.

4. Méthode selon la revendication 1, **caractérisée en ce que** la charge de la résine adsorbante cationique est définie par des particules ayant une surface superficielle de 900 m²/g.

5. Méthode selon la revendication 1, **caractérisée en ce que** le chargement (20) des particules de résine adsorbante cationique est définie par un diamètre de pores de 900 Angströms.

6. Méthode selon l'une quelconque des revendications 1 à 5, **caractérisée en ce que** le contact entre le solide soluble de l'extrait liquide et la charge de la résine adsorbante cationique peut être effectué selon un rapport allant de 10 kg à 20 kg de solide soluble/kg de la charge (20) de la résine adsorbante cationique.

7. Méthode de production de café soluble/instantané, comprenant les étapes de torréfaction de grains de café vert ; de granulation des grains torréfiés ; d'extraction des matières solides solubles du café par infusion afin de fournir un extrait de café liquide ; de concentration de l'extrait liquide traité pour un séchage ou un emballage ultérieur de l'extrait selon un format concentré, la méthode étant **caractérisée en ce que** l'extrait liquide de café est soumis, avant son étape de concentration, à une étape de réduction d'au moins 50% de sa teneur en acrylamide selon la méthode définie selon l'une quelconque des revendications 1 à 6, et **en ce que** l'extrait liquide de grains de café torréfiés fournit une concentration allant de 05% à 20% en matières solides solubles, un pH allant de 4,5 à 5,5 et une température allant de 05°C à 50°C lors d'un contact avec la charge de la résine adsorbante cationique.
